(19) Europäisches Patentamt

European Patent Office

Office européen des brevets

(11) **EP 4 506 420 A1**

(12) **EUROPEAN PATENT APPLICATION**
published in accordance with Art. 153(4) EPC

(43) Date of publication:
**12.02.2025 Bulletin 2025/07**

(21) Application number: **23779490.4**

(22) Date of filing: **13.03.2023**

(51) International Patent Classification (IPC):
*C08L 101/00* (2006.01)    *C08K 9/04* (2006.01)
*C09K 5/14* (2006.01)

(52) Cooperative Patent Classification (CPC):
**C08K 9/04; C08L 101/00; C09K 5/14**

(86) International application number:
**PCT/JP2023/009543**

(87) International publication number:
**WO 2023/189470 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.03.2022 JP 2022059526**

(71) Applicant: **TOKUYAMA CORPORATION**
**Yamaguchi 745-8648 (JP)**

(72) Inventors:
• INAKI Yoshitaka
  Shunan-shi, Yamaguchi 745-8648 (JP)
• INAGAWA Hisamori
  Shunan-shi, Yamaguchi 745-8648 (JP)
• TSUCHIDA Kouki
  Shunan-shi, Yamaguchi 745-8648 (JP)
• AOKI Kenta
  Shunan-shi, Yamaguchi 745-8648 (JP)

(74) Representative: **Dehns**
**10 Old Bailey**
**London EC4M 7NG (GB)**

(54) **THERMALLY CONDUCTIVE FILLER**

(57) The present invention provides a thermally conductive filler having a high filling property into a resin. The present invention includes a thermally conductive filler containing a first surface-treated powder and a second surface-treated powder having a different degree of hydrophobicity from that of the first surface-treated powder. In particular, when in the thermally conductive filler, a particle diameter D50 with a cumulative volume of 50% is 0.1 to 2 µm and the amount of coarse particles of 5 µm or more is controlled to be small, a heat dissipation material composition filled with the thermally conductive filler exhibits extremely excellent characteristics that it is possible to reliably fill narrow gaps.

EP 4 506 420 A1

**Description**

Technical Field

The present invention relates to a thermally conductive filler.

Background Art

In recent years, due to a demand for miniaturization and high performance of an electronic component, high integration of a semiconductor device has progressed, and at the same time, the use amount of a heat dissipation material for efficiently releasing heat generated from the devices has expanded. In addition, heat dissipation performance is required to be further improved. In order to release heat generated by a semiconductor element to, for example, a heat sink or a housing, the heat dissipation material is disposed in various paths, and the material and the form of the heat dissipation material are also various. In particular, a demand for a heat dissipation material including a resin composition in which a resin is filled with a filler having a high thermal conductive property (a thermally conductive filler) has increased in the market due to the degree of freedom of the type and the form of a material that can be selected. Examples of the thermally conductive filler that is often used include alumina, aluminum nitride, boron nitride, zinc oxide, and magnesium oxide. Examples of an application in which a thermal conductivity is expected to be further improved as the heat dissipation material including the resin composition include a heat dissipation sheet, a solid semiconductor encapsulant, a liquid semiconductor encapsulant such as an underfill, a thermally conductive grease, and a thermally conductive adhesive. When filling the resin with the filler, improvement in a filling property by a surface treatment is widely performed (for example, Patent Literature 1).

Citation List

Patent Literature

Patent Literature 1: JP 2022-26651 A

Summary of Invention

Technical Problem

In the resin composition, when increasing a filling amount of the filler with respect to the resin in order to obtain a high thermal conductive property, the viscosity of the resin composition increases, and the moldability of the resin composition decreases. Therefore, in order to make a high thermal conductivity and high moldability compatible, it is required to enhance the filling property of the filler. Therefore, an object of the present invention is to provide a thermally conductive filler having a high filling property with respect to a resin.

Solution to Problem

As a result of intensive studies to achieve the above object, the present inventors have found that when a mixed powder obtained by mixing a surface-treated powder with another inorganic powder treated with a surface treatment agent different from the surface-treated powder is used as a filler, the viscosity of a resin composition can be reduced compared to the case of using such powders alone, and have completed the present invention.

That is, the present invention is a thermally conductive filler comprising a first surface-treated powder and a second surface-treated powder having a different degree of hydrophobicity from that of the first surface-treated powder. A difference between the degree of hydrophobicity of the first surface-treated powder and the degree of hydrophobicity of the second surface-treated powder is preferably 2 or more.

Preferably, the first surface-treated powder is at least one type of surface-treated powder selected from the group consisting of aluminum oxide, aluminum nitride, boron nitride, magnesium oxide, zinc oxide, silicon carbide, silicon nitride, and diamond, and a content of the second surface-treated powder is 2 parts by volume to 100 parts by volume per 100 parts by volume of the first surface-treated powder. The second surface-treated powder is preferably at least one type of surface-treated powder selected from the group consisting of silica, aluminum oxide, aluminum nitride, boron nitride, magnesium oxide, zinc oxide, silicon carbide, silicon nitride, and diamond. Further, the first surface-treated powder is preferably an aluminum nitride surface-treated powder. Furthermore, in a particle size distribution measured with a laser diffraction scattering particle size distribution analyzer using an ethanol solvent, it is preferable that in the thermally conductive filler, a particle diameter D50 with a cumulative volume of 50% is 0.1 to 2.0 $\mu$m and coarse particles of 5 $\mu$m or more are less than 3% by mass.

An embodiment of the present invention is a heat dissipation material resin composition comprising a resin and the thermally conductive filler described above.

Advantageous Effects of Invention

By using the thermally conductive filler of the present invention, when the resin is filled with the thermally conductive filler, it is possible to decrease the viscosity of the resin compared to the case of using a thermally conductive filler using one type of surface-treated powder alone. Therefore, it is easy to improve the moldability of the resin composition and to increase filler loading to enhance the thermal conductive property of the resin composition.

In particular, when in the thermally conductive filler, the particle diameter D50 with a cumulative volume of 50% is 0.1 to 2.0 $\mu$m and the amount of coarse particles of 5 $\mu$m or more is controlled to be small, the resin composition exhibits extremely high fluidity when the resin composition is formed by mixing the thermally conductive filler with the second surface-treated powder. Therefore, when the resin composition is used as a heat dissipation material, particularly, an underfill, the resin composition exhibits an extremely excellent characteristics that it is possible to reliably fill narrow gaps with the heat dissipation material resin composition having a high thermal conductivity.

Description of Embodiments

The present invention provides a thermally conductive filler including a first surface-treated powder and a second surface-treated powder having a different degree of hydrophobicity from that of the first surface-treated powder. The surface-treated powder indicates a powder subjected to a surface treatment using a surface treatment agent. The thermally conductive filler indicates a filler containing at least 50% by volume or more of a powder having a thermal conductivity of 15 W/mK or more.

In general, a powder subjected to a surface treatment using one type of surface treatment agent is used as the filler, and is kneaded with a resin to prepare a resin composition. By performing the surface treatment, affinity between the resin and the filler increases, and a filling property can be improved. On the other hand, in the filling with respect to the resin, an interaction between surface-treated particles is also affected, and for example, due to an interaction between surface treatment agents on the particle surface, it may be difficult for the surface-treated particles to be dispersed in the resin. Here, it is assumed that when mixing surface-treated powders having different degrees of hydrophobicity, the interaction between the surface treatment agents can be alleviated, and a higher filling property can be obtained compared to a case where one type of surface treatment agent is used.

As the surface treatment agent in the present invention, a known surface treatment agent is used without particular limitation as long as a chemical bond with, for example, a hydroxyl group present in a surface oxide layer of the powder to be subjected to the surface treatment can be formed and bond to the surface. Examples of the surface treatment agent include a silane compound, an aluminate coupling agent, and a titanate coupling agent. Among them, the silane compound capable of reacting at a particularly high reaction rate can be suitably used.

For the silane compound used as the surface treatment agent, specific examples of a silane compound having a reactive functional group include alkoxysilane such as 3-glycidoxypropyltrimethoxysilane, 3-glycidoxypropyltriethoxysilane, 3-glycidoxypropylmethyldimethoxysilane, 3-glycidoxypropylmethyldiethoxysilane, 2-(3,4-epoxycyclohexyl)ethyltrimethoxysilane, 3-methacryloxypropyltrimethoxysilane, 3-methacryloxypropyltriethoxysilane, 3-methacryloxypropylmethyldimethoxysilane, 3-methacryloxypropylmethyldiethoxysilane, 3-acryloxypropyltrimethoxysilane, 3-mercaptopropyltrimethoxysilane, 3-aminopropyltrimethoxysilane, 3-aminopropyltriethoxysilane, 2-aminoethyl-3-aminopropyltrimethoxysilane, 2-aminoethyl-3-aminopropylmethyldimethoxysilane, 3-dimethylaminopropyltrimethoxysilane, 3-diethylaminopropyltrimethoxysilane, 3-triethoxysilyl-N-(1,3-dimethyl-butylidene)propylamine, N-phenyl-3-aminopropyltrimethoxysilane, vinyltrimethoxysilane, vinyltriethoxysilane, p-styryltrimethoxysilane, and allyltrimethoxysilane.

Examples of a silane compound having a non-reactive functional group include methyltrimethoxysilane, dimethyldimethoxysilane, dimethyldiethoxysilane, trimethylmethoxysilane, ethyltrimethoxysilane, n-propyltrimethoxysilane, isobutyltrimethoxysilane, isobutyltriethoxysilane, n-hexyltrimethoxysilane, n-hexyltriethoxysilane, cyclohexyltrimethoxysilane, cyclohexylmethyldimethoxysilane, n-octyltriethoxysilane, phenyltrimethoxysilane, phenyltriethoxysilane, diphenyldimethoxysilane, diphenyldiethoxysilane, trifluoropropyltrimethoxysilane, and trifluoropropylmethyldimethoxysilane.

Examples of other silane compounds that can be used include chlorosilane such as vinyltrichlorosilane, methyltrichlorosilane, dimethyldichlorosilane, trichloromethylsilane, ethyldimethylchlorosilane, propyldimethylchlorosilane, phenyltrichlorosilane, trifluoropropyltrichlorosilane, and isopropyldiethylchlorosilane.

Among them, a particularly preferable combination of the surface treatment agents may be a combination of surface treatment agents having relatively high affinity with an epoxy resin and different hydrophobicity. Examples of a silane compound having high affinity with the epoxy resin include a silane compound having a functional group capable of reacting with an epoxy group, such as a glycidoxy group and an amino group. In addition, a functional group such as a methacryloxy group, an acryloxy group, a phenyl group, a vinyl group, and a styryl group is not reactive with the epoxy group but has high affinity with the epoxy resin, and thus, a silane compound having such a functional group is also preferable. In addition, the silane compound having a phenyl group has high affinity with the epoxy resin, and contributes to, for example, a decrease in the viscosity of the resin composition, improvement in adhesion to the resin, and the mechanical strength of a cured product of the composition. Among them, examples of a particularly preferred combination of the silane compounds include a silane compound having a glycidoxy group and a silane compound having an amino group, a silane compound having a glycidoxy group and a silane compound having a methacryloxy group, a silane compound having a methacryloxy group and a silane compound having an amino group, a silane compound having a methacryloxy group and a silane compound having a vinyl group, a silane compound having an amino group and a silane compound having a vinyl group, and a silane compound having an amino group and a silane compound having a phenyl group. In such preferred combinations, one may be used as the surface treatment agent of the first surface-treated powder, and the other may be used as the surface treatment agent of the second surface-treated powder.

The raw materials of the first surface-treated powder and the second surface-treated powder of the present invention are not particularly limited, and it is possible to use a known powder that can be subjected to a surface treatment, and examples of the first surface-treated powder and the second surface-treated powder of the present invention include surface-treated powders containing silica, aluminum oxide, aluminum nitride, boron nitride, magnesium oxide, zinc oxide, silicon carbide, silicon nitride, or diamond as a raw material. Among them, the first surface-treated powder is preferably a surface-treated powder of aluminum oxide (Thermal Conductivity: 20 W/mK), aluminum nitride (Thermal Conductivity: 180 W/mK), boron nitride (Thermal Conductivity: 200 W/mK), magnesium oxide (Thermal Conductivity: 40 W/mK), zinc oxide (Thermal Conductivity: 50 W/mK), silicon carbide (Thermal Conductivity: 270 W/mK), silicon nitride (Thermal Conductivity: 30 to 80 W/mK), or diamond (Thermal Conductivity: 2000 W/mK) having a high thermal conductivity, more preferably a surface-treated powder of aluminum oxide, aluminum nitride, or silicon nitride, and particularly preferably a surface-treated powder of aluminum nitride. The second surface-treated powder is preferably a surface-treated powder of silica, aluminum oxide, aluminum nitride, or silicon nitride, and more preferably a surface-treated powder of aluminum nitride.

In the present invention, it is important that the first surface-treated powder and the second surface-treated powder have different degrees of hydrophobicity. As described above, since the degree of hydrophobicity is different, the interaction between the particles can be suppressed, and the filling property can be improved. A difference between the degrees of hydrophobicity is preferably 2 or more, and more preferably 5 or more.

The degree of hydrophobicity of the surface-treated powder can be evaluated by the settleability of a mixed solvent of water and methanol. This is a method utilizing the fact that the surface-treated powder floats on water but is completely suspended in methanol. That is, 100 cc of an aqueous methanol solution is prepared in a beaker with a volume of 200 cc at a concentration with an increment of 1% by volume, 1 g of the surface-treated powder is added to each aqueous solution, and the solution in the beaker is stirred with a magnetic stirrer for 5 minutes. The value of the volume percent of methanol when 50% of the surface-treated powder is suspended in the solution is set as the degree of hydrophobicity.

The degree of hydrophobicity of the first surface-treated powder and the second surface-treated powder is not particularly limited, but is preferably 1 to 25 from the viewpoint of affinity with an epoxy resin and a (meth)acrylic resin which is preferable as a resin of the resin composition described later.

The particle diameters of the first surface-treated powder and the second surface-treated powder are not particularly limited. However, in the thermally conductive filler obtained by mixing the first surface-treated powder and the second surface-treated powder having different degrees of hydrophobicity, in a case where the particle diameters of the first surface-treated powder and the second surface-treated powder are relatively small, an effect of reducing the viscosity is particularly easily obtained when the thermally conductive filler is kneaded with the resin. In addition, it is advantageous that the particles of the first surface-treated powder and the second surface-treated powder are small in order to allow the resin composition to be obtained to flow into narrow gaps. Therefore, in the particle size distribution of the first surface-treated powder and the second surface-treated powder measured with a laser diffraction scattering particle size distribution analyzer using an ethanol solvent, a particle diameter D50 with a cumulative volume of 50% is preferably 0.1 to 2.0 $\mu$m, more preferably 0.1 to 1.5 $\mu$m, and still more preferably 0.1 to 1.2 $\mu$m. The amount of coarse particles of 5 $\mu$m or more is preferably less than 3% by mass, and more preferably less than 1% by mass. In addition, in the thermally conductive filler obtained by mixing the first surface-treated powder and the second surface-treated powder, the particle diameter D50 with a cumulative volume of 50% is preferably 0.1 to 2.0 $\mu$m, more preferably 0.1 to 1.5 $\mu$m, and even more preferably 0.1 to 1.2 $\mu$m. The amount of coarse particles of 5 $\mu$m or more is preferably less than 3% by mass, and more preferably less than 1% by mass.

The specific surface areas of the first surface-treated powder and the second surface-treated powder of the present invention are not particularly limited, but a BET specific surface area measured by a nitrogen adsorption one-point method is preferably 0.5 m$^2$/g or more and 12.0 m$^2$/g or less. In the thermally conductive filler obtained by mixing the first surface-treated powder and the second surface-treated powder, the BET specific surface area measured by the nitrogen adsorption one-point method is preferably 0.5 $m^2/g$ or more, and more preferably 2.0 $m^2/g$ or more, and preferably 12.0 $m^2/g$ or less, and more preferably 11.0 $m^2/g$ or less.

A mixing ratio of the first surface-treated powder and the second surface-treated powder can be appropriately selected in accordance with targeted thermal conductivity and fluidity, but the second surface-treated powder is preferably 2 parts by volume or more, more preferably 5 parts by volume or more, and particularly preferably 10 parts by volume or more, and preferably 100 parts by volume or less, more preferably 70 parts by volume or less, and particularly preferably 60 parts by volume or less, with respect to 100 parts by volume of the first surface-treated powder.

When the thermally conductive filler of the present invention is used as a filler for a semiconductor encapsulant, $\alpha$-ray dose generated from the filler is preferably 0.005 counts/cm$^2\cdot$h or less, and the $\alpha$-ray dose is more preferably 0.003 counts/cm$^2\cdot$h or less. Accordingly, it is possible to reduce the $\alpha$-ray dose generated from the semiconductor encapsulant. A large generation amount of $\alpha$-ray causes the malfunction of a semiconductor, but by using the filler with low $\alpha$-ray, an effect of reducing the occurrence probability of such an error. Low $\alpha$-ray dose is particularly required in the application of an underfill used at a position particularly close to the semiconductor. In the measurement of the $\alpha$-ray dose, the $\alpha$-ray dose generated from a powder sample during a certain period of time is counted. Since the $\alpha$-ray is mainly emitted from a radioactive element such as uranium and thorium derived from a natural raw material, the $\alpha$-ray dose can be effectively reduced by using, for example, a purified raw material that is less affected by a natural raw material, as the raw material of the powder.

The thermally conductive filler of the present invention may be composed of only the first surface-treated powder and the second surface-treated powder, or may contain other powders other than the first surface-treated powder and the second surface-treated powder as long as the effect of the present invention is not impaired. The content of the other powders is preferably 15% by volume or less, and more preferably 10% by volume or less, with respect to the thermally conductive filler.

[Method for Producing Thermally Conductive Filler]

The thermally conductive filler of the present invention can be simply produced by preparing the first surface-treated powder and the second surface-treated powder having different degrees of hydrophobicity, respectively, and mixing the surface-treated powders at a desired compounding ratio.

A method for producing the first surface-treated powder and the second surface-treated powder is not particularly limited, and examples of a method capable of simply producing the surface-treated powders include a method in which a predetermined amount of surface treatment agent is brought into contact with a raw material powder and a heating treatment is performed. The amount of surface treatment agent to be brought into contact with the raw material powder may be appropriately adjusted depending on the type of raw material powder, and for example, when the raw material powder is an aluminum nitride powder, the amount of surface treatment agent to be brought into contact with the raw material powder is 0.1 to 5 parts by mass, preferably 0.5 to 4 parts by mass, with respect to 100 parts by mass of the raw material powder. In the present specification, the powder before being subjected to the surface treatment is referred to as the "raw material powder".

In the production method, when the surface-treated powder is an aluminum nitride powder, as a raw material aluminum nitride powder before being subjected to the surface treatment, a powdered material produced by a known method of the related art can be used without particular limitation. Examples of a method for producing the raw material aluminum nitride powder include a direct nitridation method, a reduction-nitridation method, and a gas-phase synthesis method.

The particle size distribution of the raw material aluminum nitride powder is not particularly limited, and may be appropriately determined in consideration of a change in the particle diameter due to the surface treatment of a targeted surface-treated aluminum nitride powder. In the particle size distribution of the raw material aluminum nitride powder, for example, in the particle size distribution measured using the laser diffraction scattering particle size distribution analyzer, the particle diameter D50 with a cumulative volume of 50% is preferably in a range of 0.1 to 2.0 $\mu$m. Further, the raw material aluminum nitride powder preferably has a specific surface area of 0.5 $m^2/g$ or more, which is measured by a BET method.

The raw material aluminum nitride powder may contain up to approximately 5 parts by mass of impurities such as an alkaline earth element and a rare earth element derived from a raw material or intentionally added in a synthesis method. The raw material aluminum nitride powder may contain up to approximately 5 parts by mass of boron nitride as impurities derived from an anti-agglomeration agent or a setter. However, the amount of impurities that significantly lowers the crystallinity of aluminum nitride causes a decrease in the thermal conductive property, which is not preferable. The content of the aluminum nitride in the raw material aluminum nitride powder is preferably 90% by mass or more, more preferably 95% by mass or more, and even more preferably 99% by mass or more.

The raw material aluminum nitride powder is required to have a surface oxide layer for a reaction with the surface treatment agent. In general, since the surface oxide layer is formed by natural oxidation when the raw material aluminum nitride powder is stored, it is not necessary to perform a special operation for providing an oxide layer, but an oxidation treatment step may be intentionally performed in order to enhance the reaction efficiency of the surface treatment agent.

The oxide layer of the raw material aluminum nitride powder is preferably subjected to an oxidation treatment so that the density of a hydroxyl group in the raw material aluminum nitride powder is 0.8 pieces/nm$^2$ or more, particularly 0.9 pieces/nm$^2$ or more and 2.0 pieces/nm$^2$ or less, and particularly 1.6 pieces/nm$^2$ or less. Particles subjected to an excessive oxidation treatment in which the density of the hydroxyl group exceeds 2.0 pieces/nm$^2$, unlike the surface of normal aluminum nitride, may be in a state where an oxidation reaction excessively proceeds and a state where hydrolysis proceeds and the particles are altered to aluminum hydroxide. Such a state is not preferable because the surface has a low thermal conductive property.

In the production method, a method for bringing the raw material powder into contact with the surface treatment agent is not particularly limited, and either a dry surface treatment or a wet surface treatment may be used.

The dry surface treatment is a dry mixing method without using a large amount of solvent when mixing the raw material powder and the surface treatment agent, and examples thereof include a method in which the surface treatment agent is gasified and mixed with the powder, a method in which a liquid surface treatment agent is input by spraying or dropping and mixed with the powder, and a method in which the surface treatment agent is diluted with a small amount of organic solvent to increase the amount of liquid, and further sprayed or dropped.

The wet surface treatment is a method using a solvent when mixing the raw material powder and the surface treatment agent, and examples thereof include a method in which the raw material powder, the surface treatment agent, and the solvent are mixed, and then, the solvent is removed by, for example, drying.

The agglomeration of the particles may proceed due to the surface treatment reaction, and powder characteristics and the filling property with respect to the resin may be impaired. In this case, it is preferable to remove the coarse particles by a disintegrating process or a classification process. Examples of a disintegrating method include disintegrating by a dry disintegrator such as a stone griding mill, an automated mortar, a cutter mill, a hammer mill, or a pin mill. Examples of the classification process include airflow classification and classification by a vibrating screen.

[Resin Composition]

The thermally conductive filler of the present invention has a high filling property, and when the resin is filled with the thermally conductive filler to form the resin composition, the resin composition exhibits excellent viscosity characteristics and fluidity.

As the resin constituting the resin composition, a thermosetting resin and a thermoplastic resin are used without limitation.

Examples of the thermosetting resin include a phenol resin, an epoxy resin, a melamine resin, a urea resin, an unsaturated polyester resin, a diallyl phthalate resin, a polyurethane resin, and a silicone resin. Examples of the thermoplastic resin include a vinyl-polymerized resin such as (meth)acrylic resin and polystyrene, polyamide, nylon, polyacetal, polycarbonate, polyphenylene ether, polyester, polyethylene terephthalate, cyclic polyolefin, polyphenylene sulfide, polytetrafluoroethylene, polysulfone, a liquid crystal polymer, polyether ether ketone, thermoplastic polyimide, and polyamideimide. Among them, an epoxy resin and a (meth)acrylic resin are preferable from the viewpoint of suitability for the application of a heat dissipation material and ease of processing.

Examples of the epoxy resin include a polyfunctional epoxy resin such as a bisphenol A epoxy resin, a bisphenol F epoxy resin, a phenol novolac epoxy resin, a cresol novolac epoxy resin, an alicyclic epoxy resin, a heterocyclic epoxy resin, a glycidyl ester epoxy resin, a glycidyl amine epoxy resin, a biphenyl epoxy resin, a naphthalene ring-containing epoxy resin, and a cyclopentadiene-containing epoxy resin. Among them, the bisphenol A epoxy resin, the bisphenol F epoxy resin, and the biphenyl epoxy resin are preferable.

As a curing agent for curing the epoxy resin, a general curing agent for the epoxy resin can be used. Specific examples of the curing agent include a thermosetting curing agent such as amine, polyamide, imidazole, an acid anhydride, a boron trifluoride-amine complex, dicyandiamide, organic acid hydrazide, a phenol novolac resin, a bisphenol novolac resins, and a cresol novolac resin, and a photocuring agent such as diphenyliodonium hexafluorophosphate and triphenylsulfonium hexafluorophosphate.

Examples of the (meth)acrylic resin include (meth)acrylonitrile, (meth)acrylamide, a (meth)acrylic acid, methyl (meth)acrylate, ethyl (meth)acrylate, hydroxyethyl (meth)acrylate, butyl (meth)acrylate, hydroxybutyl (meth)acrylate, 2-(meth)acryloyloxyethyl succinate, 2-(meth)acryloyloxyethyl maleate and a salt thereof, 2-(meth)acryoyloxyethyl phthalate, trifluoroethyl (meth)acrylate, perfluorobutyl ethyl (meth)acrylate, perfluorooctyl ethyl (meth)acrylate, (dimethylamino)ethyl (meth)acrylate, (diethylamino)ethyl (meth)acrylate, (meth)acryloxyethyl hydrogen phosphate, ethylene glycol di(meth)acrylate, propylene glycol di(meth)acrylate, 1,4-butanediol di(meth)acrylate, and 1,6-hexanediol di(meth)acrylate, 1,9-nonanediol di(meth)acrylate, 1,10-decanediol di(meth)acrylate, glycerol di(meth)acrylate, tetrafluoroethyl di(meth)acrylate, hexafluoropropyl di(meth)acrylate, octafluorobutyl di(meth)acrylate, bis[2-(meth)acryloxyethyl] hydrogen phosphate, di(meth)acrylate of an ethylene oxide adduct or a propylene oxide adduct of bisphenol A, a bisphenol A-diepoxy-acrylic acid adduct, tricyclodecane dimethanol diacrylate, urethane di(meth)acrylate, and pentaerythritol tri(meth)acrylate.

The acrylic resin can be obtained by polymerizing the corresponding (meth)acrylic monomer. As a polymerization initiator for polymerizing and curing the (meth)acrylic monomer, a known initiator such as a thermal polymerization initiator and a photopolymerization initiator can be used. Suitable examples of the thermal polymerization initiator include an organic peroxide such as octanoyl peroxide, lauroyl peroxide, t-butyl peroxy-2-ethyl hexanoate, benzoyl peroxide, t-butyl peroxyisobutyrate, t-butyl peroxylaurate, t-hexyl peroxybenzoate, and di-t-butyl peroxide, and an azobis-based polymerization initiator such as 2,2,-azobisisobutyronitrile and 2,2,-azobis-(2,4,-dimethyl valeronitrile). In particular, when polymerization is performed at 80°C to 160°C, for example, benzoyl peroxide and t-butyl peroxy-2-ethyl hexanoate can be suitably used. It is general that the use amount of such polymerization initiators is 0.1 to 20 parts by mass, and preferably 0.5 to 10 parts by mass, with respect to 100 parts by mass of the monomer.

The resin composition preferably contains the thermally conductive filler of the present invention at a ratio of 20 to 200 parts by volume with respect to 100 parts by volume of the resin. In the present invention, the compounding ratio of the curing agent and the polymerization initiator for curing the resin is also calculated as the resin.

The resin composition may contain other components in addition to the resin and the thermally conductive filler of the present invention. Examples of the other components include an inorganic filler other than the thermally conductive filler of the present invention, an antitarnish agent, a surfactant, a dispersant, a coupling agent, a colorant, a plasticizer, a viscosity modifier, and an antibacterial agent.

The resin composition is suitable as the material of a heat dissipation member for efficiently dissipating heat from a semiconductor component mounted on, for example, a home appliance, an automobile, or a laptop computer. Specific examples thereof include a thermally conductive grease, a thermally conductive gel, a heat dissipation sheet, a phase change sheet, and an adhesive. In addition to the above, the resin composition can also be used as, for example, an insulating layer used for, for example, a metal base substrate, a printed substrate, or a flexible substrate, a semiconductor encapsulant, an underfill, a housing, or a heat dissipation fin. In particular, since the thermally conductive filler of the present invention has a high filling property, the resin composition containing the thermally conductive filler is capable of making a high filler loading and a low viscosity compatible, and can be suitably used for the semiconductor encapsulant, particularly the underfill, which is required to have high flowability with respect to narrow gaps.

Examples

Hereinafter, the present invention will be further specifically described with reference to Examples, but the present invention is not limited to these Examples. Raw materials used and physical property measurement conditions will be described below.

[Raw Material Powder]

Table 1 shows raw material powders.

[Table 1]

Table 1

| Abbreviation | Raw material powder | Average particle diameter D50 |
|---|---|---|
| I | Aluminum nitride | 0.9 μm |
| II | Aluminum nitride | 0.7 μm |
| III | Aluminum oxide | 0.5 μm |
| IV | Aluminum oxide | 0.2 μm |
| V | Silica | 0.3 μm |
| VI | Silica | 0.1 μm |
| VII | Aluminum oxide | 1.2 μm |
| VIII | Silica | 1.0 μm |

[Surface Treatment Agent]

- GPS: 3-glycidoxypropyltrimethoxysilane (Tokyo Chemical Industry Co., Ltd. > 97%)
- MPS: 3-methacryloxypropyltrimethoxysilane (Tokyo Chemical Industry Co., Ltd. > 98%)
- VMS: vinyltrimethoxysilane (Tokyo Chemical Industry Co., Ltd. > 98%)
- PMS: phenyltrimethoxysilane (Tokyo Chemical Industry Co., Ltd. > 98%)
- PAPS: N-phenyl-3-aminopropyltrimethoxysilane (Shin-Etsu Chemical Co., Ltd. > 95%)

[Epoxy Resin]

- C1: a mixture of an epoxy resin YDF-8170c (manufactured by NIPPON STEEL Chemical & Material Co., Ltd.) and an amine curing agent KAYAHARD A-A (manufactured by Nippon Kayaku Co., Ltd.) Mixing Ratio is 4 : 1 (a mass ratio).

[D50]

For a dispersed liquid obtained by dispersing a powder sample in a solvent at a concentration of 0.2% by mass, and performing ultrasonic irradiation at approximately 200 W for 2 minutes, a particle size distribution was measured using a laser diffraction scattering particle size distribution analyzer. As the solvent, water was used for the raw material powder, and ethanol was used for a surface-treated powder. In the volume frequency distribution of the particle diameter, the volume frequency was accumulated from the smaller particle diameter, and the value of the particle diameter at which the accumulated value was 50% was set as D50.

[Specific Surface Area]

A specific surface area was determined by a BET method (a nitrogen adsorption one-point method) using a specific surface area analyzer (manufactured by SHIMADZU CORPORATION, Flow Sorb 2-2300 type). For the measurement, 2 g of the powder sample was used, and the powder sample previously subjected to a drying treatment at 100°C for 1 hour in a nitrogen gas flow was used for the measurement.

[Amount of Coarse Particles]

10 g of the powder sample was mixed with 200 g of an isopropyl alcohol solvent, and ultrasonic irradiation at approximately 200 W was further performed for 10 minutes to prepare a slurry. A nylon mesh (NYTAL NY5-HC) having a mesh size of 5 $\mu$m was prepared, and a mass ($m_1$ [g]) was measured. Subsequently, a nylon mesh was set on a Buchner funnel, the slurry was subjected to suction filtration with the nylon mesh, and the nylon mesh was washed by passing through 200 g of isopropyl alcohol. The nylon mesh was dried at 80°C for 12 hours, a mass ($m_2$ [g]) was measured, and a mass increase ($m_2$ - $m_1$) before and after the suction filtration was divided by the amount of powder of 10 g used for preparing the slurry to obtain the amount (% by mass) of coarse particles of 5 $\mu$m or more as in Formula (1).

$$\text{Amount [\%] of Coarse Particles} = (m_2 - m_1) \times 100/10 \quad (1)$$

[Degree of Hydrophobicity]

100 cc of an aqueous methanol solution was prepared in a beaker with a volume of 200 cc at a concentration with an increment of 1% by volume, 1 g of the surface-treated powder was added to each aqueous solution, and the solution in the beaker was stirred with a magnetic stirrer for 5 minutes. The value of the volume percent of methanol in which 50% of the surface-treated powder was suspended in the solution was set as the degree of hydrophobicity.

[Surface Treatment]

600 g of the raw material powder shown in Table 2, a predetermined amount of surface treatment agent, and 1200 g of isopropyl alcohol were put in a glass recovery flask, and stirred for 30 minutes with a fluororesin stirring blade. The isopropyl alcohol was removed under a reduced pressure at 50°C using a rotary evaporator, and then, dried under a reduced pressure at 100°C to obtain the surface-treated powder. The raw materials and the physical properties of each surface-treated powder are shown in Table 2.

[Table 2]

Table 2

| Abbreviation after surface treatment | Raw material powder | Surface treatment agent | | Physical property | | |
|---|---|---|---|---|---|---|
| | | Abbreviation | Use amount (g) | D50 | Amount of coarse particles | Degree of hydrophobicity |
| AN1 | I | GPS | 5.01 | 0.9 μm | < 1% | 1 |
| AN2 | I | MPS | 5.23 | 0.9 μm | < 1% | 15 |
| AN3 | I | PAPS | 4.60 | 0.9 μm | < 1% | 20 |
| AN4 | I | PMS | 4.33 | 0.9 μm | < 1% | 15 |
| AN5 | I | VMS | 3.43 | 0.9 μm | < 1% | 12 |
| AN6 | II | MPS | 6.97 | 0.7 μm | < 1% | 15 |
| AN7 | II | PAPS | 6.13 | 0.7 μm | < 1% | 20 |
| AO1 | III | GPS | 7.51 | 0.5 μm | < 1% | 1 |
| AO2 | III | MPS | 7.85 | 0.5 μm | < 1% | 15 |
| AO3 | III | PAPS | 6.90 | 0.5 μm | < 1% | 20 |
| AO4 | IV | MPS | 17.43 | 0.2 μm | < 1% | 15 |
| AO5 | IV | PAPS | 15.33 | 0.2 μm | < 1% | 20 |
| AO6 | VII | MPS | 1.74 | 1.2 μm | < 1% | 15 |
| AO7 | VII | PAPS | 1.53 | 1.2 μm | < 1% | 20 |
| AO8 | III | PMS | 5.35 | 0.5 μm | < 1% | 15 |
| AO9 | IV | PMS | 11.90 | 0.2 μm | < 1% | 15 |
| S1 | V | MPS | 13.95 | 0.3 μm | < 1% | 15 |
| S2 | V | PAPS | 12.27 | 0.3 μm | < 1% | 20 |
| S3 | V | PMS | 11.54 | 0.3 μm | < 1% | 15 |
| S4 | VI | MPS | 20.92 | 0.1 μm | < 1% | 15 |
| S5 | VI | PAPS | 18.40 | 0.1 μm | < 1% | 20 |
| S6 | VIII | MPS | 4.36 | 1.0 μm | < 1% | 15 |
| S7 | VIII | PAPS | 3.83 | 1.0 μm | < 1% | 20 |
| S8 | VIII | PMS | 2.97 | 1.0 μm | < 1% | 15 |
| S9 | VI | PMS | 14.28 | 0.1 μm | < 1% | 15 |

[Examples 1 to 42 and Comparative Examples 1 to 10]

[Thermally Conductive Filler]

A predetermined amount of each surface-treated powder was weighed and mixed well to prepare a thermally conductive filler. The contents and the physical properties of each surface-treated powder are shown in Tables 3 and 4. The content of the powder in the table is a ratio of the powder when the entire thermally conductive filler is 100% by vol.

[Table 3]

Table 3

| | Abbreviation | First surface-treated powder | | | Second surface-treated powder | | |
|---|---|---|---|---|---|---|---|
| | | Abbreviation | Degree of hydrophobicity | Content % by vol. | Abbreviation | Degree of hydrophobicity | Content % by vol. |
| Example 1 | F1 | AN1 | 1 | 70.0 | AN2 | 15 | 30.00 |
| Example 2 | F2 | AN1 | 1 | 70.0 | AN3 | 20 | 30.00 |
| Example 3 | F3 | AN2 | 15 | 70.0 | AN3 | 20 | 30.00 |
| Example 4 | F4 | AN2 | 15 | 70.0 | AN5 | 12 | 30.00 |
| Example 5 | F5 | AN2 | 15 | 70.0 | AO1 | 1 | 30.00 |
| Example 6 | F6 | AN3 | 20 | 70.0 | AO2 | 15 | 30.00 |
| Example 7 | F7 | AN2 | 15 | 70.0 | AO3 | 20 | 30.00 |
| Example 8 | F8 | AN3 | 20 | 70.0 | AO4 | 15 | 30.00 |
| Example 9 | F9 | AN2 | 15 | 70.0 | AO5 | 20 | 30.00 |
| Example 10 | F10 | AN3 | 20 | 70.0 | S1 | 15 | 30.0 |
| Example 11 | F11 | AN2 | 15 | 70.0 | S2 | 20 | 30.0 |
| Example 12 | F12 | AN3 | 20 | 70.0 | S3 | 15 | 30.0 |
| Example 13 | F13 | AN3 | 20 | 70.0 | S4 | 15 | 30.0 |
| Example 14 | F14 | AN2 | 15 | 70.0 | S5 | 20 | 30.0 |
| Example 15 | F15 | AN4 | 15 | 70.0 | AO3 | 20 | 30.0 |
| Example 16 | F16 | AN5 | 12 | 70.0 | AO3 | 20 | 30.0 |
| Example 17 | F17 | AN6 | 15 | 70.0 | AO5 | 20 | 30.0 |
| Example 18 | F18 | AN7 | 20 | 70.0 | AO4 | 15 | 30.0 |
| Example 19 | F19 | AN2 | 15 | 95.0 | AO5 | 20 | 5.0 |
| Example 20 | F20 | AN2 | 15 | 90.0 | AO5 | 20 | 10.0 |

(continued)

| | Abbreviation | First surface-treated powder | | | Second surface-treated powder | | |
|---|---|---|---|---|---|---|---|
| | | Abbreviation | Degree of hydrophobicity | Content % by vol. | Abbreviation | Degree of hydrophobicity | Content % by vol. |
| Example 21 | F21 | AN2 | 15 | 80.0 | AO5 | 20 | 20.0 |
| Example 22 | F22 | AN2 | 15 | 60.0 | AO5 | 20 | 40.0 |
| Example 23 | F23 | AN3 | 20 | 70.0 | AO6 | 15 | 30.0 |
| Example 24 | F24 | AN2 | 15 | 70.0 | AO7 | 20 | 30.0 |
| Example 25 | F25 | AN3 | 20 | 70.0 | S6 | 15 | 30.0 |
| Example 26 | F26 | AN2 | 15 | 70.0 | S7 | 20 | 30.0 |
| Example 27 | F27 | AN3 | 20 | 70.0 | S8 | 15 | 30.0 |
| Example 28 | F28 | AN3 | 20 | 70.0 | S9 | 15 | 30.0 |
| Example 29 | F29 | AO5 | 20 | 60.0 | AN2 | 15 | 40.0 |
| Example 30 | F30 | AO5 | 20 | 80.0 | AN2 | 15 | 20.0 |
| Example 31 | F31 | AO5 | 20 | 90.0 | AN2 | 15 | 10.0 |
| Example 32 | F32 | AO6 | 15 | 70.0 | AO3 | 20 | 30.0 |
| Example 33 | F33 | AO6 | 15 | 70.0 | AO5 | 20 | 30.0 |
| Example 34 | F34 | AO6 | 15 | 70.0 | S2 | 20 | 30.0 |
| Example 35 | F35 | AO6 | 15 | 70.0 | S5 | 20 | 30.0 |
| Example 36 | F36 | AN4 | 15 | 70.0 | AO5 | 20 | 30.0 |
| Example 37 | F37 | AN4 | 15 | 70.0 | S2 | 20 | 30.0 |
| Example 38 | F38 | AN4 | 15 | 70.0 | S5 | 20 | 30.0 |
| Example 39 | F39 | AN3 | 20 | 70.0 | S3 | 15 | 30.0 |
| Example 40 | F40 | AN3 | 20 | 70.0 | S9 | 15 | 30.0 |
| Example 41 | F41 | AN4 | 20 | 70.0 | AO8 | 15 | 30.0 |
| Example 42 | F42 | AN4 | 20 | 70.0 | AO9 | 15 | 30.0 |

Table 3 (continued)

| | Difference between degrees of hydrophobicity | Thermally conductive filler | | |
|---|---|---|---|---|
| | | D50 $\mu$m | Specific surface area m$^2$/g | Amount of coarse particles |
| Example 1 | 14 | 0.9 | 2.6 | < 1% |
| Example 2 | 19 | 0.9 | 2.7 | < 1% |
| Example 3 | 5 | 0.9 | 2.6 | < 1% |
| Example 4 | 3 | 0.9 | 2.6 | < 1% |
| Example 5 | 14 | 0.8 | 3.3 | < 1% |
| Example 6 | 5 | 0.8 | 3.5 | < 1% |
| Example 7 | 5 | 0.8 | 3.2 | < 1% |
| Example 8 | 5 | 0.7 | 5.5 | < 1% |
| Example 9 | 5 | 0.7 | 5.2 | < 1% |
| Example 10 | 5 | 0.7 | 4.9 | < 1% |
| Example 11 | 5 | 0.7 | 4.5 | < 1% |
| Example 12 | 5 | 0.7 | 4.8 | < 1% |
| Example 13 | 5 | 0.6 | 10.3 | < 1% |
| Example 14 | 5 | 0.6 | 9.8 | < 1% |
| Example 15 | 5 | 0.8 | 3.5 | < 1% |
| Example 16 | 8 | 0.8 | 3.3 | < 1% |
| Example 17 | 5 | 0.6 | 5.8 | < 1% |
| Example 18 | 5 | 0.6 | 5.6 | < 1% |
| Example 19 | 5 | 0.9 | 3.2 | < 1% |
| Example 20 | 5 | 0.8 | 3.6 | < 1% |
| Example 21 | 5 | 0.7 | 4.6 | < 1% |
| Example 22 | 5 | 0.6 | 6.4 | < 1% |
| Example 23 | 5 | 1.0 | 2.2 | < 1% |
| Example 24 | 5 | 1.0 | 2.3 | < 1% |
| Example 25 | 5 | 0.9 | 2.5 | <1% |
| Example 26 | 5 | 0.9 | 2.5 | <1% |
| Example 27 | 5 | 0.9 | 2.6 | <1% |
| Example 28 | 5 | 0.6 | 10.1 | <1% |
| Example 29 | 5 | 0.5 | 6.8 | <1% |
| Example 30 | 5 | 0.4 | 8.2 | <1% |
| Example 31 | 5 | 0.3 | 9.2 | <1% |
| Example 32 | 5 | 1.0 | 3.1 | <1% |
| Example 33 | 5 | 0.9 | 4.8 | <1% |
| Example 34 | 5 | 0.9 | 4.0 | <1% |
| Example 35 | 5 | 0.8 | 8.6 | <1% |
| Example 36 | 5 | 0.7 | 5.4 | <1% |
| Example 37 | 5 | 0.7 | 4.7 | <1% |
| Example 38 | 5 | 0.6 | 10.1 | <1% |

(continued)

|  | Difference between degrees of hydrophobicity | Thermally conductive filler | | |
|---|---|---|---|---|
|  |  | D50 $\mu$m | Specific surface area m$^2$/g | Amount of coarse particles |
| Example 39 | 5 | 0.7 | 4.7 | <1% |
| Example 40 | 5 | 0.6 | 9.9 | <1% |
| Example 41 | 5 | 0.8 | 3.9 | <1% |
| Example 42 | 5 | 0.7 | 4.2 | <1% |

[Table 4]

Table 4

| | Abbreviation | First surface-treated powder | | | Second surface-treated powder | | |
|---|---|---|---|---|---|---|---|
| | | Abbreviation | Degree of hydrophobicity | Content % by vol. | Abbreviation | Degree of hydrophobicity | Content % by vol. |
| Comparative Example 1 | F23 | AN1 | 1 | 70.0 | AO1 | 1 | 30.0 |
| Comparative Example 2 | F24 | AN2 | 15 | 100.0 | - | - | - |
| Comparative Example 3 | F25 | AN2 | 15 | 95.0 | AO2 | 15 | 5.0 |
| Comparative Example 4 | F26 | AN2 | 15 | 90.0 | AO2 | 15 | 10.0 |
| Comparative Example 5 | F27 | AN2 | 15 | 80.0 | AO2 | 15 | 20.0 |
| Comparative Example 6 | F28 | AN2 | 15 | 70.0 | AO2 | 15 | 30.0 |
| Comparative Example 7 | F29 | AN2 | 15 | 60.0 | AO2 | 15 | 40.0 |
| Comparative Example 8 | F30 | AN3 | 20 | 70.0 | AO3 | 20 | 30.0 |
| Comparative Example 9 | F31 | I | 0 | 70.0 | IV | 0 | 30.0 |
| Comparative Example 10 | F32 | I | 0 | 70.0 | V | 0 | 30.0 |

Table 4 (continued)

|  | Difference between degrees of hydrophobicity | Thermally conductive filler | | |
|---|---|---|---|---|
|  |  | D50 μm | Specific surface area m$^2$/g | Amount of coarse particles |
| Comparative Example 1 | 0 | 0.8 | 3.5 | < 1% |
| Comparative Example 2 | - | 0.9 | 2.7 | < 1% |
| Comparative Example 3 | 0 | 0.9 | 2.8 | < 1% |
| Comparative Example 4 | 0 | 0.9 | 3.0 | < 1% |
| Comparative Example 5 | 0 | 0.8 | 3.3 | < 1% |
| Comparative Example 6 | 0 | 0.8 | 3.5 | < 1% |
| Comparative Example 7 | 0 | 0.7 | 3.8 | < 1% |
| Comparative Example 8 | 0 | 0.8 | 3.3 | < 1% |
| Comparative Example 9 | 0 | 0.7 | 5.6 | < 1% |
| Comparative Example 10 | 0 | 0.6 | 5.0 | < 1% |

[Examples 43 to 84 and Comparative Examples 11 to 20]

[Resin Composition]

0.12 g of an epoxy resin YDF-8170c (manufactured by NIPPON STEEL Chemical & Material Co., Ltd.), 0.03 g of a curing agent KAYAHARD A-A (manufactured by Nippon Kayaku Co., Ltd.), and a predetermined amount of thermally conductive filler were weighed, and kneaded in a mortar for 15 minutes with strong shear. The kneaded product obtained was further kneaded with a triple-roll mill for 20 minutes to obtain a resin composition. The compositions and the evaluation results of the resin composition are shown in Tables 5 and 6.

[Table 5]

Table 5

|  | Abbreviation | Thermally conductive filler | | Resin | | Evaluation result | |
|---|---|---|---|---|---|---|---|
|  |  | Abbreviation | Content % by vol. | Abbreviation | Content % by vol. | Viscosity | Gap flowability |
| Example 43 | R1 | F1 | 42.4 | C1 | 57.6 | O | Δ |
| Example 44 | R2 | F2 | 42.4 | C1 | 57.6 | O | Δ |
| Example 45 | R3 | F3 | 42.4 | C1 | 57.6 | OO | O |
| Example 46 | R4 | F4 | 42.4 | C1 | 57.6 | O | Δ |
| Example 47 | R5 | F5 | 42.4 | C1 | 57.6 | O | Δ |
| Example 48 | R6 | F6 | 42.4 | C1 | 57.6 | O | O |
| Example 49 | R7 | F7 | 42.4 | C1 | 57.6 | O | OO |
| Example 50 | R8 | F8 | 42.4 | C1 | 57.6 | OO | O |
| Example 51 | R9 | F9 | 42.4 | C1 | 57.6 | OO | OO |
| Example 52 | R10 | F10 | 42.4 | C1 | 57.6 | OO | OO |
| Example 53 | R11 | F11 | 42.4 | C1 | 57.6 | OO | OO |
| Example 54 | R12 | F12 | 42.4 | C1 | 57.6 | OO | OO |
| Example 55 | R13 | F13 | 42.4 | C1 | 57.6 | O | O |

(continued)

| | Abbreviation | Thermally conductive filler | | Resin | | Evaluation result | |
|---|---|---|---|---|---|---|---|
| | | Abbreviation | Content % by vol. | Abbreviation | Content % by vol. | Viscosity | Gap flowability |
| Example 56 | R14 | F14 | 42.4 | C1 | 57.6 | O | O |
| Example 57 | R15 | F15 | 42.4 | C1 | 57.6 | O | O |
| Example 58 | R16 | F16 | 42.4 | C1 | 57.6 | O | O |
| Example 59 | R17 | F17 | 42.4 | C1 | 57.6 | O | O |
| Example 60 | R18 | F18 | 42.4 | C1 | 57.6 | O | O |
| Example 61 | R19 | F19 | 42.4 | C1 | 57.6 | O | O |
| Example 62 | R20 | F20 | 42.4 | C1 | 57.6 | O | O |
| Example 63 | R21 | F21 | 42.4 | C1 | 57.6 | OO | OO |
| Example 64 | R22 | F22 | 42.4 | C1 | 57.6 | O | O |
| Example 65 | R23 | F23 | 42.4 | C1 | 57.6 | O | Δ |
| Example 66 | R24 | F24 | 42.4 | C1 | 57.6 | O | Δ |
| Example 67 | R25 | F25 | 42.4 | C1 | 57.6 | OO | O |
| Example 68 | R26 | F26 | 42.4 | C1 | 57.6 | O | O |
| Example 69 | R27 | F27 | 42.4 | C1 | 57.6 | OO | O |
| Example 70 | R28 | F28 | 42.4 | C1 | 57.6 | O | O |
| Example 71 | R29 | F29 | 42.4 | C1 | 57.6 | O | O |
| Example 72 | R30 | F30 | 42.4 | C1 | 57.6 | O | OO |
| Example 73 | R31 | F31 | 42.4 | C1 | 57.6 | Δ | OO |
| Example 74 | R32 | F32 | 42.4 | C1 | 57.6 | OO | O |
| Example 75 | R33 | F33 | 42.4 | C1 | 57.6 | O | OO |
| Example 76 | R34 | F34 | 42.4 | C1 | 57.6 | OO | OO |
| Example 77 | R35 | F35 | 42.4 | C1 | 57.6 | OO | OO |
| Example 78 | R36 | F36 | 42.4 | C1 | 57.6 | O | O |
| Example 79 | R37 | F37 | 42.4 | C1 | 57.6 | O | O |
| Example 80 | R38 | F38 | 42.4 | C1 | 57.6 | O | OO |
| Example 81 | R39 | F39 | 42.4 | C1 | 57.6 | O | Δ |
| Example 82 | R40 | F40 | 42.4 | C1 | 57.6 | O | OO |
| Example 83 | R41 | F41 | 42.4 | C1 | 57.6 | O | O |
| Example 84 | R42 | F42 | 42.4 | C1 | 57.6 | O | OO |

[Table 6]

Table 6

| | Abbreviation | Thermally conductive filler | | Resin | | Evaluation result | |
|---|---|---|---|---|---|---|---|
| | | Abbreviation | Content % by vol. | Abbreviation | Content % by vol. | Viscosity | Gap flowability |
| Comparative Example 11 | R23 | F23 | 42.4 | C1 | 57.6 | X | X |
| Comparative Example 12 | R24 | F24 | 42.4 | C1 | 57.6 | X | X |
| Comparative Example 13 | R25 | F25 | 42.4 | C1 | 57.6 | X | X |
| Comparative Example 14 | R26 | F26 | 42.4 | C1 | 57.6 | Δ | X |
| Comparative Example 15 | R27 | F27 | 42.4 | C1 | 57.6 | Δ | X |
| Comparative Example 16 | R28 | F28 | 42.4 | C1 | 57.6 | Δ | X |
| Comparative Example 17 | R29 | F29 | 42.4 | C1 | 57.6 | X | X |
| Comparative Example 18 | R30 | F30 | 42.4 | C1 | 57.6 | X | Δ |
| Comparative Example 19 | R31 | F31 | 42.4 | C1 | 57.6 | X | X |
| Comparative Example 20 | R32 | F32 | 42.4 | C1 | 57.6 | X | X |

<Performance Evaluation of Resin Composition>

• Viscosity

The obtained resin composition was measured at 30°C with a cone-plate viscometer (RVDV-II manufactured by Brookfield Engineering Laboratories, a spindle with $\varphi$24 mm and an angle of 2 degrees was used.). The viscosity at a shear rate of 2 s$^{-1}$ was evaluated and rated as OO to X in accordance with the following criteria.

OO: less than 50000 mPa·s
O: 50000 mPa·s or more and less than 100000 mPa·s
Δ: 100000 mPa·s or more and less than 200000 mPa·s
X: 200000 mPa·s or more

• Gap Flowability

A gap with a gap of 30 $\mu$m and a width of 1 cm was formed using new polished slide glass and a double-sided tape (manufactured by Nitto Denko Corporation) with a thickness of 30 $\mu$m (referred to as a jig A). The jig A was placed on a hot plate at 110°C and held for 10 minutes or longer, and then, the resin composition was dropped to the end of the gap. After the dropping, the flow of the resin composition through the gap was observed, and a time when the flow distance of the resin composition reached 1 cm was measured. In accordance with the flow time, the flow was rated as OO to X as described below.

OO: shorter than 60 seconds
O: 60 seconds or longer and shorter than 180 seconds
Δ: 180 seconds or longer
X: not flowed up to 1 cm

**Claims**

1. A thermally conductive filler, comprising a first surface-treated powder and a second surface-treated powder having a different degree of hydrophobicity from that of the first surface-treated powder.

2. The thermally conductive filler according to claim 1, wherein a difference between the degree of hydrophobicity of the first surface-treated powder and the degree of hydrophobicity of the second surface-treated powder is 2 or more.

3. The thermally conductive filler according to claim 1, wherein the first surface-treated powder is at least one type of surface-treated powder selected from the group consisting of aluminum oxide, aluminum nitride, boron nitride, magnesium oxide, zinc oxide, silicon carbide, silicon nitride, and diamond, and a content of the second surface-treated powder is 2 parts by volume to 100 parts by volume per 100 parts by volume of the first surface-treated powder.

4. The thermally conductive filler according to claim 1, wherein the second surface-treated powder is at least one type of surface-treated powder selected from the group consisting of silica, aluminum oxide, aluminum nitride, boron nitride, magnesium oxide, zinc oxide, silicon carbide, silicon nitride, and diamond.

5. The thermally conductive filler according to claim 1, wherein the first surface-treated powder is an aluminum nitride surface-treated powder.

6. The thermally conductive filler according to claim 1, wherein in a particle size distribution measured with a laser diffraction scattering particle size distribution analyzer using an ethanol solvent, a particle diameter D50 with a cumulative volume of 50% is 0.1 to 2.0 $\mu$m and coarse particles of 5 $\mu$m or more are less than 3% by mass.

7. A heat dissipation material resin composition, comprising a resin and the thermally conductive filler according to any one of claims 1 to 6.

**INTERNATIONAL SEARCH REPORT**

| International application No. |
|---|
| **PCT/JP2023/009543** |

### A.    CLASSIFICATION OF SUBJECT MATTER

*C08L 101/00*(2006.01)i; *C08K 9/04*(2006.01)i; *C09K 5/14*(2006.01)i
FI:    C08L101/00; C08K9/04; C09K5/14 E

According to International Patent Classification (IPC) or to both national classification and IPC

### B.    FIELDS SEARCHED

Minimum documentation searched (classification system followed by classification symbols)

C08L101/00; C08K9/04; C09K5/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

Japio-GPG/FX

### C.    DOCUMENTS CONSIDERED TO BE RELEVANT

| Category* | Citation of document, with indication, where appropriate, of the relevant passages | Relevant to claim No. |
|---|---|---|
| X | CN 109401322 A (GOERTEK INC.) 01 March 2019 (2019-03-01)<br>claims, examples | 1–7 |
| A | CN 112961469 A (XIAMEN INSTITUTE OF RARE-EARTH MATERIALS) 15 June 2021 (2021-06-15) | 1-7 |
| A | JP 2013-56996 A (DENKI KAGAKU KOGYO K.K.) 28 March 2013 (2013-03-28) | 1-7 |
| A | JP 2-76248 A (NITTO DENKO CORP.) 15 March 1990 (1990-03-15) | 1-7 |
| A | JP 2003-213095 A (SUMITOMO BAKELITE CO., LTD.) 30 July 2003 (2003-07-30) | 1-7 |
| P, A | WO 2022/131199 A1 (TOKUYAMA CORP.) 23 June 2022 (2022-06-23) | 1-7 |

☐ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 May 2023** | **23 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/009543**

| Patent document cited in search report | | | Publication date (day/month/year) | Patent family member(s) | | | Publication date (day/month/year) |
|---|---|---|---|---|---|---|---|
| CN | 109401322 | A | 01 March 2019 | (Family: none) | | | |
| CN | 112961469 | A | 15 June 2021 | (Family: none) | | | |
| JP | 2013-56996 | A | 28 March 2013 | (Family: none) | | | |
| JP | 2-76248 | A | 15 March 1990 | (Family: none) | | | |
| JP | 2003-213095 | A | 30 July 2003 | (Family: none) | | | |
| WO | 2022/131199 | A1 | 23 June 2022 | TW | 202231574 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022026651 A